Europäisches Patentamt

European Patent Office

Office européen des brevets

(19)

(11) Veröffentlichungsnummer: **0 238 773**
**A1**

# (12) EUROPÄISCHE PATENTANMELDUNG

(21) Anmeldenummer: 86730053.5

(22) Anmeldetag: 25.03.86

(51) Int. Cl.4: **C02F 7/00** , C02F 3/26

(43) Veröffentlichungstag der Anmeldung:
30.09.87 Patentblatt 87/40

(84) Benannte Vertragsstaaten:
**AT BE DE FR NL**

(71) Anmelder: **DOMKE GMBH & CO. KG**
**Rhenaniastrasse Am Salzhof 15**
**D-1000 Berlin 20(DE)**

(72) Erfinder: **Gamradt, Ruth**
**Schinkelstrasse 2**
**D-1000 Berlin 33(DE)**

(74) Vertreter: **Pfenning, Meinig & Partner**
**Mozartstrasse 17**
**D-8000 München 2(DE)**

(54) **Vorrichtung zur Anreicherung von Wasser mit Sauerstoff.**

(57) Es wird eine auf einem Schwimmkörper (1) angeordnete mobile Vorrichtung zur Anreicherung des sauerstoffarmen Wassers von Gewässern mit Sauerstoff beschrieben. Der Sauerstoff ist in komprimierter, vorzugsweise flüssiger Form in einem Tank (7) gelagert. Über Saugrohre (3) wird das Wasser aus dem Gewässer angesaugt und der Sauerstoff aus dem Tank wird dem angesaugten Wasser zugesetzt. In einem Reaktor (6) erfolgt eine weitgehende Vermischung des Sauerstoffs mit dem Wasser. Über Druckleitungen (9) und eine Verteileranordnung (10,11) wird das mit Sauerstoff angereicherte Wasser unterhalb der Oberfläche des Gewässers wieder in dieses zurückgeleitet.

EP 0 238 773 A1

Fig. 1

## Vorrichtung zur Anreicherung von Wasser mit Sauerstoff

Die Erfindung betrifft eine mobile Vorrichtung nach dem Oberbegriff des Anspruchs 1.

Es werden sowohl mobile als auch immobile Vorrichtungen zur Anreicherung von Wasser mit Sauerstoff verwendet. Die mobilen Vorrichtungen dienen zur Beseitigung oder Milderung plötzlich auftretender, lokal begrenzter Sauerstoffarmut in Gewässern und sind in der Regel auf Landfahrzeugen installiert. Der Sauerstoff wird hier in komprimierter Form auf dem Fahrzeug gelagert und in das Gewässer eingeblasen. Nachteilig sind hier die geringe Kapazität des Sauerstofftanks und die Beschränkung der Sauerstoffeinleitung auf ufernahe Bereiche der Gewässer. Durch immobile Vorrichtungen kann die Sauerstoffanreicherung systematisch erfolgen.

Die hierfür erforderlichen Investitionen lohnen sich jedoch nur für größere Gewässer. Diese Vorrichtungen arbeiten gebräuchlicherweise so, daß Luft oder Sauerstoff in das Wasser eingeblasen werden, so daß Kapazitätsprobleme nicht bestehen. Bei diesen immobilen Vorrichtungen ist jedoch andererseits nicht die Möglichkeit gegeben, örtlich begrenzte kurzzeitige Sauerstoffverarmungen - schnell und wirksam zu bekämpfen.

Es ist daher die Aufgabe der vorliegenden Erfindung, eine Vorrichtung zur Anreicherung des sauerstoffarmen Wassers eines Gewässers mit Sauerstoff zu schaffen, mit der in wirtschaftlicher Weise sowohl eine systematische Anhebung des allgemeinen Sauerstoffgehalts eines Gewässers unabhängig von seiner Größe als auch eine effektive, räumlich konzentrierte Bekämpfung plötzlicher Sauerstoffverarmungen erreicht werden kann.

Diese Aufgabe wird bei einer mobilen Vorrichtung zur Anreicherung des sauerstoffarmen Wassers eines Gewässers mit Sauerstoff mit einem diesen in komprimierter Form enthaltenden Tank erfindungsgemäß gelöst durch die im kennzeichnenden Teil des Anspruchs 1 angegebenen Merkmale. Vorteilhafte Ausgestaltungen der erfindungsgemäßen Vorrichtung ergeben sich aus den Unteransprüchen.

Die Erfindung zeichnet sich dadurch aus, daß die Vorrichtung auf einem Schwimmkörper angeordnet ist und Wasseraufnahme- und Waserabgabeeinrichtungen sowie eine Mischeinrichtung zur Vermischung von Sauerstoff und Wasser aufweist. Die Vorrichtung ist somit an jedem Ort eines - schiffbaren Gewässers einsetzbar und der verwendete Tank kann eine wesentlich größere Kapazität aufweisen als ein auf einem Landfahrzeug transportierter Tank. Durch die Leitung des Wassers durch eine Mischeinrichtung entsteht eine so innige Verbindung und damit eine so starke Anreicherung des Wassers mit Sauerstoff, wie sie durch einfaches Einblasen von Luft bzw. Sauerstoff in das Wasser nicht erzielt werden kann.

In ihrer einfachsten Form kann die Mischeinrichtung aus einem einen freien Fall des mit Sauerstoff versetzten Wassers ermöglichenden Behälter bestehen. Der freie Fall wird durch einen Aufprall am Boden des Behälters plötzlich beendet, so daß das Wasser zerstäubt wird und so die Anlagerung von Sauerstoff erleichtert. Zur Erhöhung der Sauerstoffanreicherung kann die Mischeinrichtung zusätzlich besondere feststehende Einbauten für das herabfallende Wasser besitzen, die den Wasserstrom in Teilströme zerlegen.

Zur Einleitung des Sauerstoffs in das Wasser ist der Sauerstofftank vorteilhaft mit der das Wasser in die Mischeinrichtung fördernden Zuführungsleitung verbunden. Dadurch findet eine Verteilung des Sauerstoffs im Wasser bereits vor Erreichen der Mischeinrichtung statt, so daß die Wirkung der Mischeinrichtung noch erhöht wird.

Die Wasserabgabeeinrichtung befindet sich zweckmäßig unterhalb der Wasseroberfläche und ist rohrförmig mit mehreren in axialer Richtung verschwenkten Ausläßöffnungen ausgebildet. Das Zurückleiten des mit Sauerstoff angereicherten Wassers in das Gewässer erfolgt somit ohne größere Geräuschbelästigung und ohne ein größeres Aufrühren des Wassers an der Oberfläche. Die Wasserabgabeeinrichtung ist hierbei mit den von der Mischeinrichtung abgehenden Leitungen vorzugsweise lösbar verbunden, wobei diese Verbindung durch ein Gelenk hergestellt werden kann. Durch diese Ausbildung kann die Wasserabgabeeinrichtung während der Fahrt des Schwimmkörpers zum oder vom Einsatzort aus dem Wasser herausgeschwenkt werden. Die Bewegung des Schwimmkörpers auf dem Wasser wird dann durch die Wasserabgabeeinrichtung nicht behindert, so daß er in hohem Maße manövrierfähig ist und durch eingene Kraft schnell zu den jeweiligen Einsatzorten fahren kann. Die Gelenkverbindung ermöglicht es, das mit Sauerstoff angereicherte Wasser in unterschiedlicher Höhe einzuleiten.

Die Erfindung wird im folgenden anhand eines in den Figuren dargestellten Ausführungsbeispiels näher erläutert. Es zeigen:

Fig. 1 eine schwimmende Sauerstoffanreicherungsvorrichtung in der Draufsicht, und

Fig. 2 die Vorrichtung nach Fig. 1 in einer senkrechten Schnittansicht.

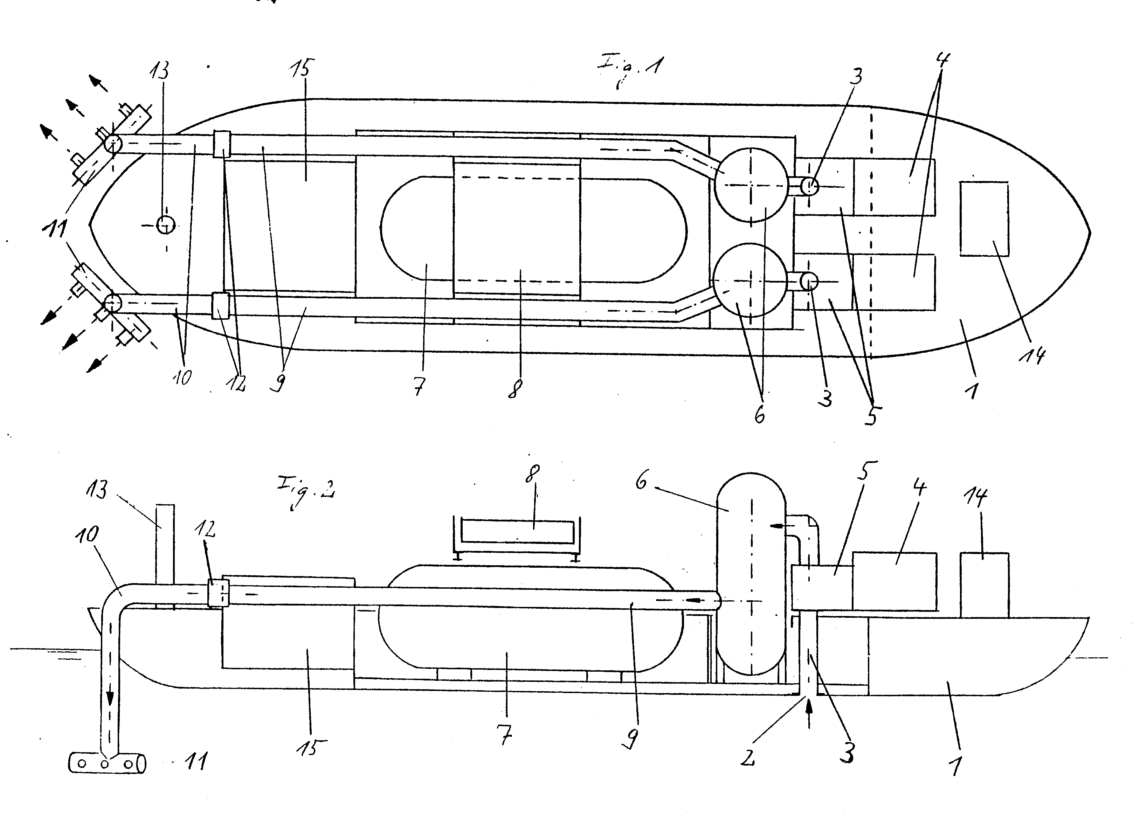

Ein Schwimmkörper 1 in Form einer offenen Schute weist an seiner Unterseite zwei mit Schutzgittern abgedeckte Einlaßöffnungen 2 auf, an die jeweils ein Saugrohr 3 angeschlossen ist. In jedem der Saugrohre 3 ist eine von einem Dieselmotor 4 angetriebene Pumpe 5 angeordnet, die über das zugeordnete Saugrohr 3 Wasser aus dem Gewässer ansaugt und über eine Druckleitung 3a in einen Reaktor 6 befördert.

In einem Tank 7 mit mehreren Kubikmetern Inhalt ist flüssiger Sauerstoff gelagert. Der dem Tank 7 entnommene Sauerstoff wird in einem Vergaser 8 in den gasförmigen Zustand gebracht und aus diesem über eine nicht gezeigte Leitung zu den Druckrohren 3a geführt, in denen er im Bereich jeweils zwischen der Pumpe 5 und dem Reaktor 6 dem angesaugten Wasser zugesetzt wird.

Die Druckrohre 3a münden jeweils in den oberen Abschnitt der Reaktoren 6. In deren unteren Abschnitt mündet jeweils eine Druckleitung 9, über die das Wasser wieder abfließt. Das eingeleitete Wasser strömt somit im freien Fall durch den jeweiligen Reaktor 6 nach unten, wobei durch den Aufprall eine weitgehende Zerstäubung des Wassers erfolgt und so die für die Anlagerung von Sauerstoff erforderliche Oberfläche vergrößert wird. Der Mischeffekt kann gegebenenfalls durch feststehende Einbauten noch verstärkt werden.

Das mit Sauerstoff angereicherte Wasser gelangt aus den Reaktoren 6 jeweils in eine der Druckleitungen 9 und aus dieser in eine Wasserabgabeeinrichtung aus einem Zuführungsrohr 10 und den Auslaßöffnungen 11 für das sauerstoffreiche Wasser. Die Auslaßöffnungen 11 befinden sich in einigem Abstand unterhalb der Wasseroberfläche, so daß die Wasserbewegung an dieser relativ gering ist.

Das Zuführungsrohr 10 und Auslaßöffnungen 11 ragen im Betrieb, d.h. in der gezeigten Stellung, über die Umrisse des Schwimmkörpers 1 hinaus. Sie können daher bei Fahrten des Schwimmkörpers zu oder von dem Einsatzort hinderlich sein. Sie sind aus diesem Grunde jeweils über ein Gelenk 12 mit der zugeordneten Druckleitung 9 verbunden. Der Schwimmkörper 1 besitzt einen Stauraum 14 beispielsweise für den Dieseltank und Meß-und Steuereinrichtungen. Ein eigener Antrieb für die Fortbewegung des Schwimmkörpers 1 ist ebenfalls vorgesehen;

Mit zwei mechanischen Hubeinrichtungen 13 kann das Zuführungsrohr 10 mit den Auslaßöffnungen 11 infolge des Gelenk-Verbindung 12 geschwenkt werden. Eine Einleitung des mit Sauerstoff angereicherten Wassers in variabler Höhe, entsprechend den unterschiedlichen Gewässer-Tiefen, wird dadurch gewährleistet.

Bei Fahrten zum und vom Einsatzort kann die Wasserabgabeeinrichtung über den Gewässerspiegel herausgeschwenkt werden, so daß sie die Manövrierfähigkeit des Schwimmkörpers während dieser Fahrten nicht beeinträchtigen.

**Ansprüche**

1. Mobile Vorrichtung zur Anreicherung des sauerstoffarmen Wassers eines Gewässers mit Sauerstoff mit einem diesen in komprimierter Form enthaltenden Tank, **dadurch gekennzeichnet,** daß die Vorrichtung auf einem Schwimmkörper (1) angeordnet ist und Wasseraufnahme-(2,3) und Wasserabgabe-Einrichtungen (10,11) sowie einen Mischeinrichtung (6) zur Vermischung von Sauerstoff und Wasser aufweist.

2. Vorrichtung nach Anspruch 1, dadurch gekennzeichnet, daß die Mischeinrichtung aus einem einen freien Fall des mit Sauerstoff versetzten Wassers ermöglichenden Behälter (6) besteht.

3. Vorrichtung nach Anspruch 1 oder 2, dadurch gekennzeichnet, daß die Mischeinrichtung unter Druck steht.

4. Vorrichtung nach einem der Ansprüche 1 bis 3, dadurch gekennzeichnet, daß die Mischeinrichtung feststehende Einbauten im Strömungsweg des Wassers aufweist, die den Wasserstrom in Teilströme zerlegen.

5. Vorrichtung nach einem der Ansprüche 1 bis 4, dadurch gekennzeichnet, daß der der Sauerstoff enthaltende Tank (7) mit der Wasser in die Mischeinrichtung (6) fördernden Zuführungsleitung (3) verbunden ist.

6. Vorrichtung nach einem der Ansprüche 1 bis 5, dadurch gekennzeichnet, daß der Tank (7) Sauerstoff in flüssiger Form enthält und zwischen dem Tank (7) und der Mischeinrichtung (6) ein Sauerstoff-Verdampfer (8) angeordnet ist.

7. Vorrichtung nach einem der Ansprüche 1 bis 6, dadurch gekennzeichnet, daß die Wasserabgabeeinrichtung (10,11) unterhalb der Wasserfläche rohrförmig mit mehreren in axialer Richtung verschwenkten Auslaßöffnungen ausgebildet ist.

8. Vorrichtung nach einem der Ansprüche 1 bis 7, dadurch gekennzeichnet, daß die Wasserabgabeeinrichtung (10,11) mit von der Mischeinrichtung (6) abgehenden Leitungen (9) lösbar verbunden ist.

9. Vorrichtung nach Anspruch 8, dadurch gekennzeichnet, daß zwischen den Wasserabgabeeinrichtung (10,11) und den Leitungen (9) jeweils ein Gelenk (12) angeordnet ist.

10. Vorrichtung nach einem der Ansprüche 1 bis 9, dadurch gekennzeichnet, daß der Schwimmkörper (1) mit unter der Wasserfläche liegenden Einlaßöffnungen (2) für die Wasseraufnahme versehen ist.

Fig.1

Fig.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-2 649 126   (LINDE)<br><br>* Seite  4,  Absatz 1; Seite 11, Zeile 5 - Seite 12 *<br>--- | 1,3,5, 10 | C 02 F    7/00<br>C 02 F    3/26 |
| X | US-A-3 755 142   (W. WHIPPLE Jr.)<br><br>* Spalte 10, Zeilen 7-37;  Spalte 7,  Zeile 67 - Spalte 8, Zeile 54 *<br>--- | 1,6,8- 10 | |
| A | DE-C- 929 220   (UNION RHEINISCHE BRAUNKOHLEN KRAFTSTOFF AG)<br>* Seite 2, Zeile 76  -  Seite 3, Zeile 16 *<br>--- | 8,9 | |
| A | US-A-3 772 187   (D.F. OTHMER)<br>* Spalte 3, Zeile 49 - Spalte 4, Zeile 2;  Spalte  4,  Zeilen 8-26,38-40 *<br>--- | 2,3,5 | **RECHERCHIERTE SACHGEBIETE (Int. Cl.4)**<br><br>C 02 F |
| A | DE-A-2 358 215   (BAMAG)<br>* Seiten 5,6; Ansprüche 1,2; Figur *<br><br>----- | 4 | |

Der vorliegende Recherchenbericht wurde für alle Patentansprüche erstellt.

| Recherchenort | Abschlußdatum der Recherche | Prüfer |
|---|---|---|
| DEN HAAG | 12-11-1986 | TEPLY J. |